# EUROPÄISCHE PATENTSCHRIFT

(11) **EP 1 059 230 B1**
(45) Veröffentlichungstag und Bekanntmachung des Hinweises auf die Patenterteilung: **16.03.2005**
(21) Anmeldenummer: 00110313.4
(22) Anmeldetag: 13.05.2000
(51) Int. Cl.: B64D 11/00, B61D 29/00, B60Q 3/02, B63B 45/06

(54) **Funktionseinheit für Passagierkabinen, insbesondere für Flugzeugpassagierkabinen**
Functional unit for passenger cabins, in particular for aircraft passenger cabins
Unité fonctionelle pour cabines de passagers, en particulier pour cabines de passagers d'avions

(30) Priorität: 11.06.1999 DE 19926776
(43) Veröffentlichungstag der Anmeldung: 13.12.2000
(73) Patentinhaber: Airbus Deutschland GmbH, 21129 Hamburg (DE)
(72) Erfinder: Bock, Thomas, 31330 Grenade (FR); Muin, Andrew, 21698 Harsefeld (DE); Schuhmacher, Markus, 21614 Buxtehude (DE)
(74) Vertreter: Hansmann, Dierk, Dipl.-Ing.

(56) Entgegenhaltungen:
- EP-A- 0 763 466
- EP-A- 0 901 963
- US-A- 5 707 028

## Beschreibung

Die Erfindung betrifft eine Funktionseinheit für Passagierkabinen, insbesondere für Flugzeugpassagierkabinen, die im wesentlichen Komfortelemente, Anzeigeelemente und Sicherheitselemente aufweist.

In einer Passagierkabine eines Flugzeuges ist es üblich, daß die Allgemeinbeleuchtung zumindest teilweise mittels einer Bestrahlung der Kabinendecke erfolgt und damit eine indirekte Beleuchtung der Kabine erreicht wird. Die Lichtquelle selbst, bekannterweise eine Leuchtstoffröhre, ist hinter Verkleidungsteilen angeordnet und für einen in der Flugzeugkabine stehenden Passagier in der Regel nicht einsehbar. Für eine zufriedenstellende indirekte Beleuchtung bedarf es aber eines gekrümmten Deckenverlaufes der Kabinendecke. Es wird eine homogen ausgeleuchtete und nach unten diffus abstrahlende Decke angestrebt, wobei der optimale Verlauf der Deckenkrümmung in empirischen Versuchen ermittelt werden kann, wie z.B. aus EP 408 709 B1 bekannt ist.

Für Passagieräume im Unterflurbereich eines Flugzeuges, wie sie beispielsweise aus EP 606 920 A1 oder DE 44 16 506 A1 bekannt sind, ist jedoch eine indirekte Kabinenbeleuchtung der beschriebenen Art nicht realisierbar. Die Passagierräume im Unterflurbereich sind in der Regel in ihrer Höhe begrenzt, insbesondere bei Passagierräumen, die modifizierte Frachträume sind. So ist eine für eine indirekte Kabinenbeleuchtung notwendige Wölbung der Deckenpanels für diese Passagierräume aufgrund der Höhenbegrenzung und aufgrund der im bzw. am Fußboden des oberen Decks angeordneten Systeminstallationen nicht in dem Maße möglich, daß eine ausreichende Ausleuchtung über die gesamte Deckenbreite erreicht wird

Eine Funktionseinheit gemäß dem Oberbegriff des Anspruchs 1 ist aus EP-A-0 901 963 bekannt.

Der Erfindung liegt daher die Aufgabe zugrunde, eine Funktionseinheit auszubilden, die die oben genannten Nachteile beseitigt und insbesondere für Passagierräume im Unterflurbereich eine ausreichende Kabinenbeleuchtung ermöglicht.

Diese Aufgabe wird bei einer gattungsgemäßen Funktionseinheit mit den im Patentanspruch 1 genannten Maßnahmen gelöst.

Dabei ist insbesondere von Vorteil, daß auch für Räume mit einer geringen Höhe eine ausreichende Allgemeinbeleuchtung erreicht ist. Darüber hinaus sind neben der Kabinenbeleuchtung weitere Service-, Komfort- und Sicherheitsfunktionen in der Funktionseinheit zusammengefaßt. In einer kompakten Bauweise sind die für den Passagier notwendigen Komfort-, Schalt- und Sicherheitselemente übersichtlich angeordnet und schnell erfaßbar. Die Funktionseinheit wird insbesondere den ergonomischen Anforderungen gerecht und ist für eine Anordnung an der Seitenwand einer Passagierkabine, insbesondere in einem passagiergenutzten Unterflurbereich eines Flugzeuges geeignet.

Im Anspruch 11 ist die Ausbildung eines entsprechenden Passagierraumes mit einer Funktionseinheit aufgezeigt. Die Funktionseinheit ist so angeordnet, daß sie eine Allgemeinbeleuchtung mit einer guten Ausleuchtung realisiert und entsprechend ihrer Funktion für den Passagier leicht erkennbar ist.

Weiterbildungen und vorteilhafte Ausgestaltungen sind in den Unteransprüchen 2 bis 10 sowie 12 bis 14 angegeben.

Mit der Ausbildung der Funktionseinheit gemäß Anspruch 2 ist eine Allgemeinbeleuchtung realisiert, die auch im ausreichenden Maße eine Ausleuchtung in Nähe des Fußbodenbereichs des Passagierraumes ermöglicht.

Die Maßnahmen gemäß der Ansprüche 2 bis 7 zeigen die vorteilhafte Anordnung der dem Passagier zugänglichen Bedien-, Komfortelemente und notwendige Sicherheitselemente sowie einen vorteilhaften Aufbau der Funktionseinheit.

Die Maßnahmen gemäß der Ansprüche 8, 9 und 10 ermöglichen die Integration von Systemen, die speziell in einer Flugzeugpassagierkabine vorgesehen sind und dem Komfort und der Sicherheit der Passagiere dienen.

Die Maßnahme gemäß Anspruch 12 ermöglicht eine funktionale, platzsparende Anordnung der Funktionseinheit innerhalb des Passagierraumes. Aufgrund der Anordnung der Leuchtmittel sogar in der Nähe des Fußbodenbereichs ist eine gute Ausleuchtung von Verkehrsflächen ermöglicht. Die notwendigen Versorgungsleitungen sind vorteilhaft verdeckt und vom Zugriff Unberechtigter geschützt angeordnet.

Gemäß der Ansprüche 13 und 14 kann eine Kombination von weiteren Funktionen, die in der Passagierkabine zur Verfügung gestellt werden, und Funktionen der Funktionseinheit erfolgen und damit anforderungsgerecht für den jeweiligen Anwendungsfall die Passagierkabine ausgestattet werden.

In der Zeichnung sind Ausführungsbeispiele der Erfindung dargestellt, die nachstehend anhand der Figuren 1 bis 6 näher beschrieben sind. In den Figuren sind gleiche Bauteile mit gleichen Bezugszeichen versehen.

Die Zeichnung zeigt im einzelnen:
- Fig. 1: einen Passagierraum im Unterflurbereich eines Flugzeuges mit erfindungsgemäßen Funktionseinheiten,
- Fign. 2A, 2B, 2C: die Darstellung der Einzelheiten einer erfindungsgemäßen Funktionseinheit,
- Fig. 3: einen Horizontalschnitt durch die Funktionseinheit,
- Fig. 4: eine Ausführungsform der erfindungsgemäßen Funktionseinheit gemäß Fig. 3,
- Fig. 5: eine weitere Ausführungsform einer Funktionseinheit und
- Fig. 6: eine mögliche Anordnung der Funktionseinheit innerhalb eines Ruheraumes.

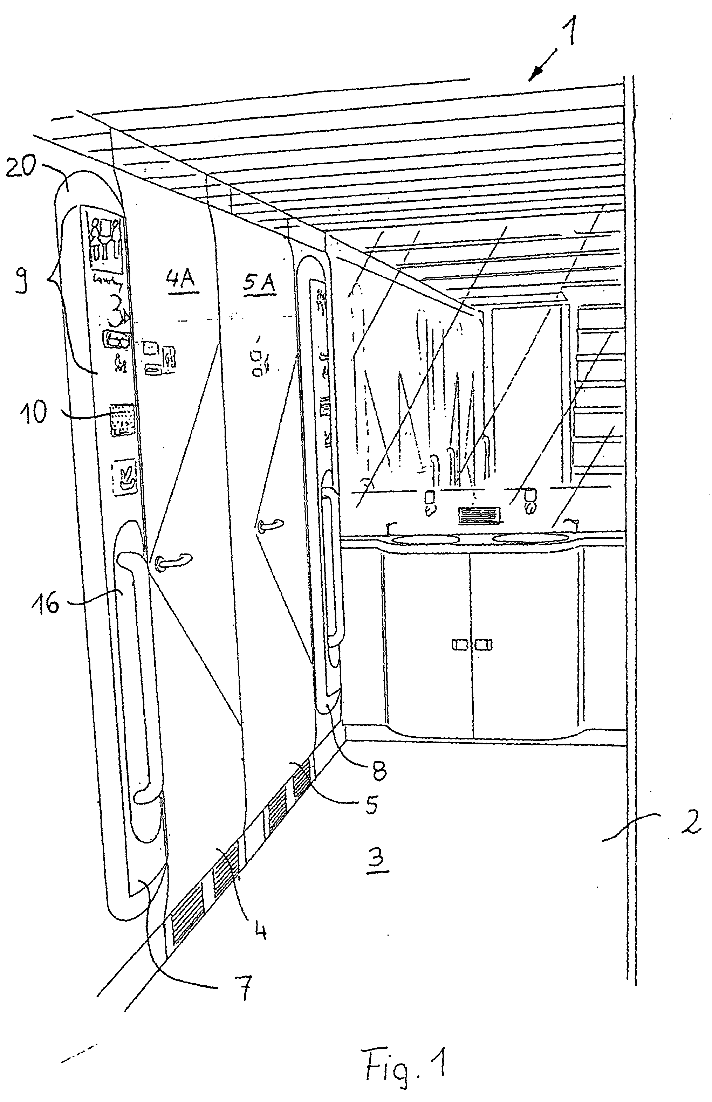

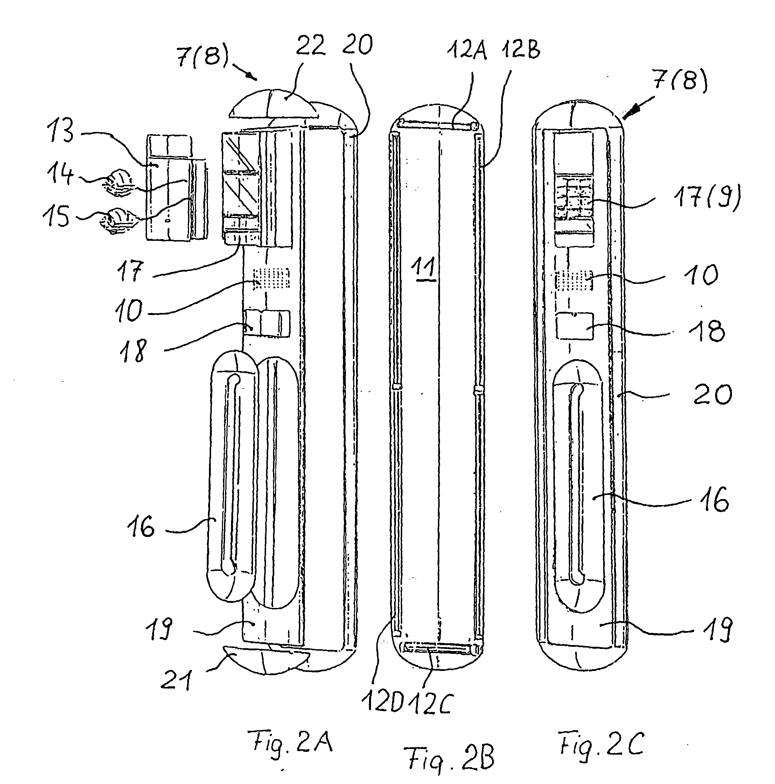

In Fig. 1 ist ein Teil einer Passagierkabine 1 eines Flugzeuges gezeigt. In Passagierkabinen 1, insbesondere in Langstreckenflugzeugen, können neben den Sitzbereichen (nicht gezeigt) im Unterflurbereich Passagierräume - beispielsweise Toilettenräume - vorgesehen sein. Ein Toilettenraum 2 ist in dieser Ausführung ersichtlich, wie er in einem Flugzeug mit mehreren Decks vorkommen kann, in denen auch das Unterdeck für Passagiere genutzt wird. Der Toilettenraum 2 weist einen Korridor 3 auf, von dem aus mehrere Toiletten, z.B. Toiletten 4 und 5 zugänglich sind. Neben den Toiletten 4 und 5 ist am Ende des Korridors 3 ein Waschplatz 6 vorgesehen. Der gezeigte Toilettenraum 2 im Unterflurbereiches eines Flugzeuges weist eine ebene Deckenkontur auf und hat aufgrund der räumlichen Begrenzungen eine Raumhöhe von nur ca. 1,96 m. So ist ein eine Wölbung des Deckenpanels nicht möglich und mit den bisher üblichen Beleuchtungslösungen im Deckenbereich ist eine ausreichende Beleuchtung des Korridors 3 nicht zu erzielen.
Funktionseinheiten 7 und 8, die in der gezeigten Ausführung jeweils einer Toilette 4 bzw. 5 zugeordnet und neben den Eingangstüren 4A bzw. 5A zur entsprechenden Toilette 4 bzw. 5 angeordnet sind, übernehmen für den Korridor 3 die Funktion der Allgemeinbeleuchtung. Neben der Funktion der Allgemeinbeleuchtung werden mit der Funktionseinheit 7 bzw. 8 noch weitere Sicherheits- bzw. Komfortfunktionen erfüllt. So können Anzeigeeinheiten 9 bzw. Displays 17 vorgesehen sein, um den Passagier über die Belegung der Toiletten zu informieren oder andere optische Informationen anzuzeigen, die entsprechend des Standortes der Funktionseinheit 7 bzw. 8 variieren können. Der Aufbau der Funktionseinheit 7 bzw. 8 wird nachfolgend anhand der Fig. 2A bis 2C ausführlich beschrieben.

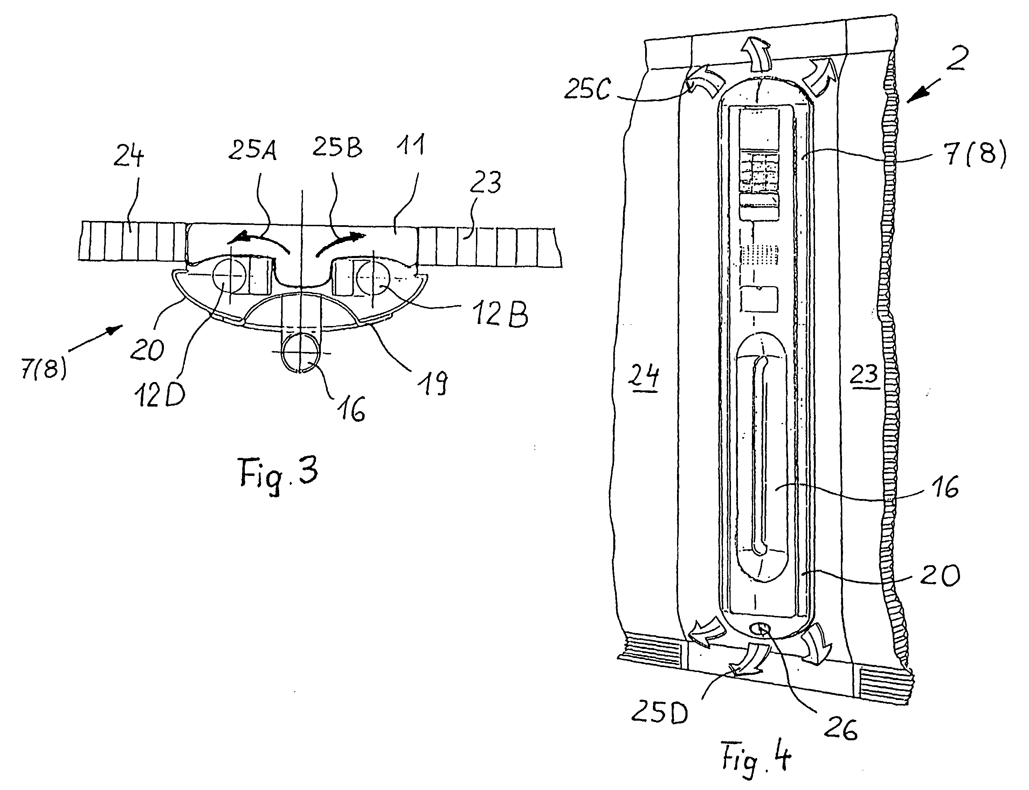

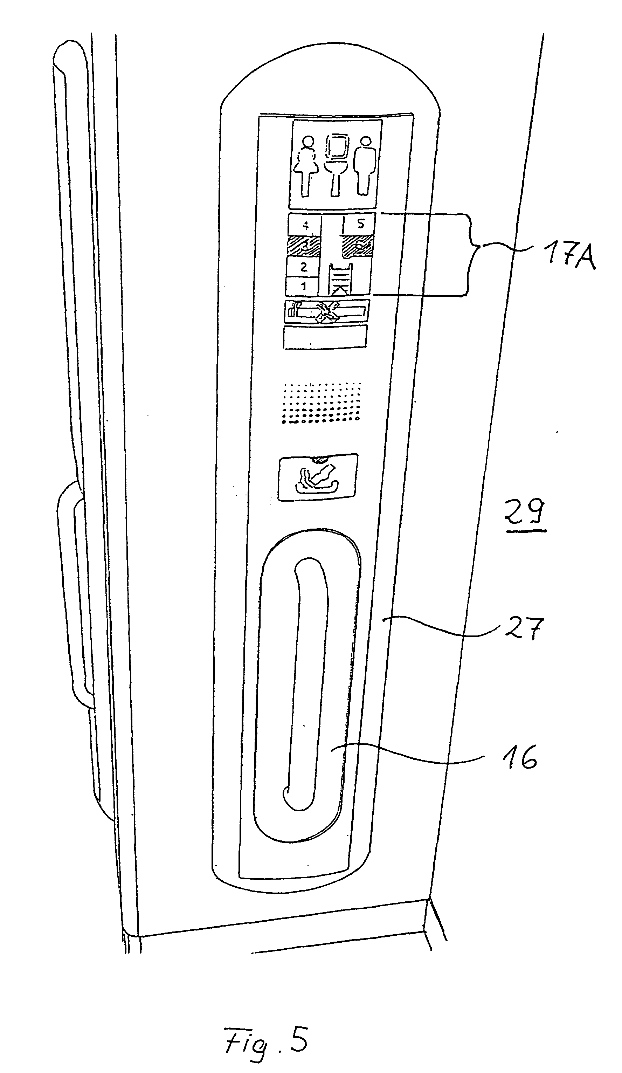

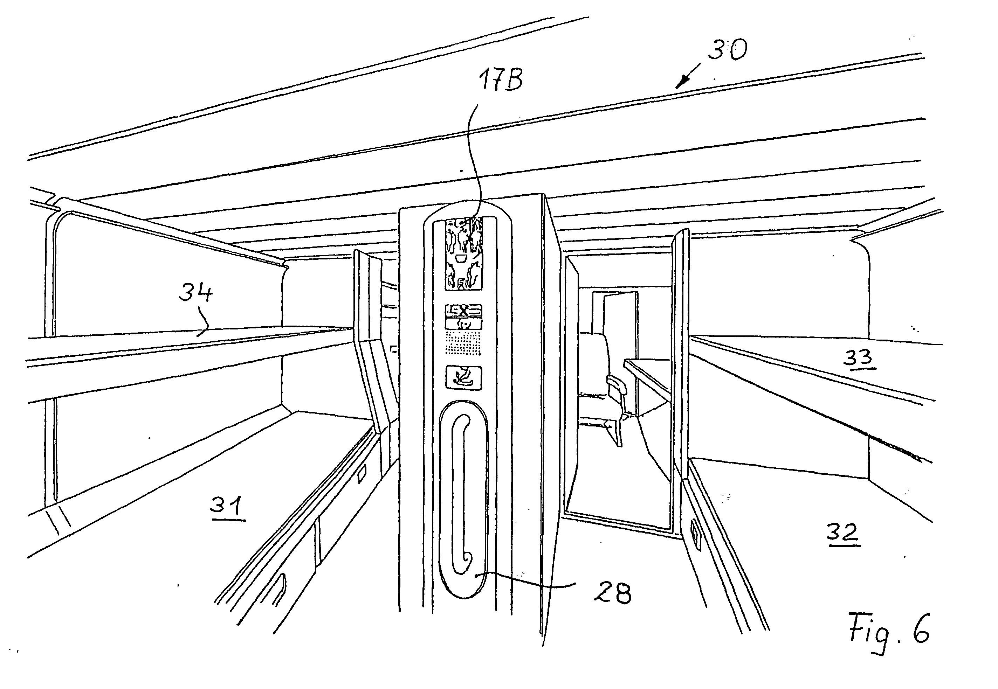

In Fign. 2A und 2B sind die Einzelteile der Funktionseinheit 7 (bzw. 8) in einer Explosionsdarstellung gezeigt. In der Fig. 2C ist die Funktionseinheit 7 (bzw. 8) im zusammengefügten Zustand ersichtlich. Die Funktionseinheit 7 (bzw. 8) ist säulenförmig ausgebildet und weist eine Grundplatte 11 auf. Mit der Rückseite dieser Grundplatte 11 ist die Funktionseinheit 7 bzw. 8 an Seitenwänden des Passagierraumes 2 bzw. Korridors 3 anordenbar. In der bevorzugten Ausgestaltung erstreckt sich die Funktionseinheit 7 bzw. 8 vom Bereich des Fußbodens bis hin zum Deckenbereich einer Passagierkabine. Die Grundplatte 11 dient als Träger für die an die Funktionseinheit 7 bzw. 8 anzuordnenden Baugruppen. Neben der Anordnung von Leuchtstoffröhren 12A, 12B, 12C und 12D, die - wie in Fig. 2B ersichtlich - im Randbereich der Grundplatte 11 eine Umrandung bilden und die die Funktion der Allgemeinbeleuchtung übernehmen, können beispielsweise auch Sicherheitselemente wie eine Sauerstoffbox 13 mit Sauerstoffmasken 14 und 15, eine Handlaufleiste 16, ein Aschenbecher 18, Lautsprecher 10 sowie Anzeige- und Informationselemente 9 und 17 vorgesehen sein. Die vertikale Anordnung der Leuchtstoffröhren 12B und 12D auf der sich über nahezu die gesamte Wandhöhe erstreckenden Grundplatte 11 erlaubt die Nutzung der gesamten Raumhöhe, um die erforderliche Lichtmenge für den Korrodor 3 zur Verfügung zu stellen. So ist insbesondere der Lichtfluß bis zur Bodennähe mit dieser Anordnung der Leuchtstoffröhren 12B und 12D vorteilhaft, da der Korridor 3 als Verkehrsfläche im Flugzeug ausreichend beleuchtet sein muß. Am unteren Ende der Funktionseinheit 7 bzw. 8 lassen sich in einer vorteilhaften Ausgestaltung Notbeleuchtungseinheiten (siehe Fig. 4 - Notbeleuchtung 26) integrieren, die bei einer freien Anbringung in der Passagierkabine eher als störende Einzelelemente empfunden werden. Die elektrischen Versorgungswege der Notbeleuchtung sind durch eine Anordnung an der Funktionseinheit 7 bzw. 8, die mit Anschlüssen an eine Zentralversorgung versehen ist, minimiert und besser zugänglich.
Welche weiteren Funktionen in der Funktionseinheit 7 bzw. 8 zusammengefaßt sind, hängt vom entsprechenden Einsatzfall ab. Mit der Zusammenfassung dieser Funktionen in einer gemeinsamern Einheit wird zum einen ein geordneteres Gesamtbild des Raumes erzielt und zum anderen die Wartung der entsprechenden Baugruppen vereinfacht.
Die umlaufenden Leuchtstoffröhren 12A, 12B, 12C und 12D bzw. andere möglichen Leuchtmittel auf der Grundplatte 11 werden von einem Abdeckrahmen 20, der vorzugsweise aus milchglasartigen lichtdurchlässigen Material bestehen, abgeschirmt. Zusätzlich zum Abdeckrahmen 20 können Teilabdekkungen an der Grundplatte 11 angeordnet sein, so daß beispielsweise für die horizontal verlaufenden Leuchtstoffröhren 12A und 12C separate Teitabdeckungen 21 und 22 vorgesehen sind. Weiterhin ist eine Deckplatte 19 innerhalb des Abdeckrahmens 20 vorgesehen, hinter der die Baugruppen wie Komfort- und Anzeige- und Sicherheitselemente angeordnet sind. Diese Deckplatte 19 enthält Aussparungen für die dem Passagier zugänglich zu machenden Bedien-, Halte- bzw. Informationselemente. Mit dem Öffnen bzw. Entfernen der Deckplatte 19 bzw. des Abdeckrahmens 20 bzw. der Teilabdeckungen 21 und 22 sind die Funktionselemente voll zugänglich und können bei Bedarf gewartet, gereinigt oder ausgetauscht werden.
In Fig. 2C ist die Funktionseinheit 7 (bzw. 8) als fertige Einheit ersichtlich. Im unteren Bereich der säulenartigen Funktionseinheit 7 oder 8 ist die Handlaufleiste 16 vertikal angeordnet. Mit einer solchen Anordnung des Handlaufs wird Passagieren, die aufgrund von Turbulenzen zu Boden gegangen sind, das Aufstehen erleichtert bzw. auch für Kinder ist ein Festhalten ermöglicht. Andere Ausführungsarten, beispielsweise auf Türgriffhöhe horizontal verlaufende Handlaufleisten oder Halteschlaufen sind ebenfalls denkbar.
Oberhalb der Handlaufleiste 16 ist in dieser Ausführungsform ein Aschenbecher 18 ersichtlich. Eine solche Baugruppe ist in Kombination mit einem Hinweisschild bzw. Piktogramm "Rauchen verboten" vorteilhaft anwendbar. Im mittleren Bereich der Funktionseinheit 7 bzw. 8 ist weiterhin ein Lautsprecher 10 vorgesehen. Damit können zentrale Durchsagen auch in Passagierräume im Unterflurbereich akustisch übermittelt werden.
Im oberen Bereich der Funktionseinheit 7 bzw. 8 ist hinter einer Abdeckung eine Sauerstoffbox 13 mit Sauerstoffmasken vorgesehen. Die Sauerstoffmasken 14 und 15 werden nur freigegeben, wenn ein Druckabfall in der Passagierkabine auftritt. Da aufgrund der möglichen Ansammlung von Passagieren im Toilettenraum bedarfsweise auch mehr Sauerstoffmasken zur Verfügung stehen müssen als in den Funktionseinheiten 7 bzw. 8 untergebracht sind, können als Ergänzung im Deckenbereich des Passagierraumes 2 weitere Sicherheitselemente, wie Sauerstoffmasken integriert sein. Auch ist eine Ausführungsform der Funktionseinheit 7 (bzw. 8) denkbar, die keine Sauerstoffbox 13 enthält. In einem solchen Fall sind mehrere Sauerstoffboxen 13 mit Sauerstoffmasken in die Decke integriert.
Im oberen Bereich der Funktionssäule 7 bzw. 8, vorzugsweise im Bereich der Abdeckung der Sauerstoffbox 13, sind Anzeigeeinheiten 9 vorgesehen. Möglich sind verschiedenartige Informationsdisplays 17, die vorzugsweise von den Leuchtstoffröhren passiv mitbeleuchtet werden. Welche optischen Informationen an den Informationsdisplays angezeigt werden, ist standortbezogen und kann entsprechend variiert werden. So sind beispielsweise in den toitettenzugeordneten Funktionseinheiten 7 bzw. 8 gemäß Fig. 1 die Nummer der entsprechenden Toilette, ein auf die zugehörige Tür weisender Pfeil sowie ein Frei- bzw. Besetztzeichen der Toilette Teil der Anzeigeeinheit 9. Weitere Ausführungen von Funktionseinheiten sind in den Fign. 5 und 6 ersichtlich.

In Fig. 3 ist ein Querschnitt durch eine Funktionseinheit 7 bzw. 8 gezeigt. Dieser Horizontalschnitt macht deutlich, daß die Grundplatte 11 in eine dafür vorgesehene Aussparung in der Seitenwand 23 bzw. zwischen benachbarten Seitenwänden 23 und 24 angeordnet ist. Denkbar ist auch, daß die Grundplatte 11 mittels Befestigungsmittel auf einem Verkleidungsteil bzw. der Seitenwand 23 fixiert wird.
Im Horizontalschnitt ist weiterhin ersichtlich, daß für eine blendfreie Abstrahlung von den Leuchtstoffröhren 128 und 12D die Deckplatte 19 nicht lichtdurchlässig ist. Die Innenseite der Deckplatte 19 ist dafür mit einer glatten Oberfläche ausgeführt, die Reflektoreigenschaften aufweist und somit das nach vorn abgestrahlte Licht auf die eigentlichen Reflektorflächen (Vorderseite der Grundplatte 11 bzw. darauf vorgesehene Reflexionsflächen) hinter den Leuchtstoffröhren 12B und 12D zurückführt, von wo es zusammen mit den übrigen Abstrahlanteilen in die gewünschten Richtungen - durch den lichtdurchlässigen Abdeckrahmen 20 - gelenkt wird. Aus gestalterischen Gründen kann die Deckplatte 19 z. B. aus einem Edelstahl- oder Aluminiumblech bestehen, deren Außenfläche beispielsweise gebürstet ausgeführt ist. Als eine weitere vorteilhafte Funktion können in die Funktionseinheit 7 bzw. 8 Luftzuführeinrichtungen der Klimaanlage zur Passagierkabine 1 integriert sein. Es ist möglich, Klimaführungsrohre in der Funktionseinheit 7 bzw. 8 als eigenständige Leitungen vorzusehen oder aber bestimmte Komponenten der Funktionseinheit 7 bzw. 8 selbst als Luftführleitungen zu nutzen und damit sogar Rohrleitungen einzusparen. Ersichtlich ist beispielsweise eine zumindest teilweise hohle, gehäuseartige Ausführung der Grundplatte 11, die ausgehend von einem Anschluß an ein Klimarohr in dem Toilettenraum 2 die Luft aufgrund der vertikalen, säulenförmigen Anordnung der Funktionseinheit 7 bzw. 8 bedarfsgerecht in entsprechender Höhe ausblasen kann. Die Strömungsrichtung ist anhand der Pfeile 25A, 25 B ersichtlich. Die Auslassöffnungen zum Austritt der Luft können beispielsweise durch Hinterschnitte der Abdeckungsteile oder durch nach vorn weisende Gehäuseöffnungen realisiert sein und werden mit für einen Fachmann üblichen Methoden gestaltet. Ein mögliche Anordnung von Auslassöffnungen ist in Fig. 4 ersichtlich.
Neben der Luftausblasung kann in einer vorteilhaften Weiterbildung der Funktionseinheit 7 bzw. 8 auch eine Luftabsaugung realisiert werden.

In Fig. 4 ist die Funktionseinheit 7 bzw. 8 gezeigt, die zumindest teilweise Funktionen der Klimatisierung übernommen hat. Die Ausblasrichtung der klimatisierten Luft ist anhand der Pfeile 25C und 25D erkennbar. Ersichtlich weiterhin eine Notbeleuchtungseinheit 26, die im unteren Bereich des Abdeckrahmens 20 oder in der separaten Teilabdeckung 21 vorgesehen ist.

In Fig. 5 ist eine weitere Ausführungform einer Funktionseinheit 27 gezeigt. Eine solche Funktionseinheit 27 ist für den Eingangsbereich des Toilettenraumes 2 vorgesehen. Sie ist im wesentlichen wie die toilettenzugeordneten Funktionseinheiten 7 bzw. 8 aufgebaut. In einem Flugzeug, bei dem der Toilettenraum 2 sich im Unterflurbereich befindet und vom normalen Passagierdeck über Treppen zu erreichen ist, ist diese Funktionseinheit 27 vorteilhaft an gut sichtbarer Stelle am unteren Ende des Treppenabgangs 29 angeordnet, um dem Passagier, der eine Toilette benutzen will, einen Überblick über den jeweiligen Besetzungszustand anzuzeigen und zu einer freien Toilette hinzuweisen. Dafür ist als Anzeigeeinheit ein Informationsdisplay 17A im oberen Bereich der Funktionseinheit 27 angeordnet, das die Anordnung der Toiletten und mittels optischer Information den Besetzungszustand anzeigt. Denkbar ist ferner, daß die Funktionseinheit 27 mit einer zentralen Purser-Station, an der zentral von einem Flugbegleiter Kabinenfunktionen gesteuert werden, verbunden ist und Informationen, z.B. Sperrung einer defekten Toilette, zentral eingegeben werden können.

In Fig. 6 ist eine Funktionseinheit 28 ersichtlich, wie sie in einem Ruheraum 30 eingesetzt werden kann. Der Ruheraum 30 kann für Flugpersonal oder für Passagiere vorgesehen sein. Der Aufbau der Funktionseinheit 28 entspricht im wesentlichen dem Aufbau der Funktionseinheit 27. Statt des Besetzungszustandes der Toiletten ist hier vorgesehen, den Belegungszustand der Betten, beispielsweise Betten 31, 32, 33 und 34 auf einem Informationsdisplay 17B zentral darzustellen. Mit einer zentralen, gut sichtbaren Anordnung der Funktionseinheit 28 innerhalb des Ruheraumes 30, vorzugsweise bereits am Eingang desselben, werden die Nutzer über freie Betten und deren Anordnung innerhalb des Raumes 30 informiert.
Ähnlich wie in der in Fig. 5 beschriebenen Ausführungsform ist es möglich, daß auch hier eine Verbindung zur Purser-Station besteht und bestimmte, zentral eingegebene Informationen an der Funktionseinheit 28 angezeigt werden bzw. abrufbar sind. Denkbar ist auch, daß eine Wechselsprechanlage vorgesehen wird, um den Ruheraum mit der Purser-Station oder dem Cockpit zu verbinden und so jederzeit den Kontakt zum Flugpersonal zu erhalten.

### Bezugszeichen

- 1 -: Passagierkabine
- 2 -: Toilettenraum
- 3 -: Korridor
- 4, 5 -: Toiletten
- 6 -: Waschplatz
- 7, 8 -: Funktionseinheiten (toilettenzugeordnet)
- 9 -: Anzeigeeinheiten
- 10 -: Lautsprecher
- 11 -: Grundplatte
- 12A, 12B 12C, 12D -: Leuchtstoffröhren
- 13 -: Sauerstoffbox
- 14 -: Sauerstoffmaske
- 15 -: Sauerstoffmaske
- 16 -: Handlaufleiste
- 17 -: Informationsdisplay
- 18 -: Aschenbecher
- 19 -: Deckplatte
- 20 -: Abdeckrahmen
- 21 -: separate Teilabdeckung
- 22 -: "
- 23 -: Seitenwand (Verkleidungsteil)
- 24 -: weitere Seitenwand
- 25A, 25B -: Pfeile zur Anzeige der Luftströmung
- 25C, 25D 26 -: Notbeleuchtungseinheit
- 27 -: weitere Ausführungsform einer Funktionseinheit
- 28 -: " " "
- 29 -: Treppenabgang
- 30 -: Ruheraum
- 31, 32, 33, 34 -: Betten im Ruheraum

## Patentansprüche

1. Funktionseinheit für Passagierkabinen, insbesondere für Flugzeugpassagierkabinen, die unter anderem Komfortelemente, Anzeigeelemente und Sicherheitselemente aufweist, und im Wandbereich eines Passagierraumes (2, 3; 29; 30) anordenbar ist **dadurch gekennzeichnet, daß** die Funktionseinheit (7; 8; 27, 28) säulenförmig ausgebildet ist, und Leuchtmittel (12A, 12B, 12C, 12D) zur Allgemeinbeleuchtung des Passagierraumes aufweist.

2. Funktionseinheit nach Anspruch 1,
**dadurch gekennzeichnet, daß** die Leuchtmittel (12A, 12B, 12C, 12D) sich zumindest in vertikaler Richtung der Funktionseinheit (7, 8; 27; 28) erstrecken und die Komfortelemente (10, 18), Anzeigeelemente (9, 17) und Sicherheitselemente (16, 13, 14, 15) einfassen.

3. Funktionseinheit nach einem der Ansprüche 1 oder 2,
**dadurch gekennzeichnet, daß** die Sicherheitselemente als Sauerstoffbox (13) mit mindestens einer Sauerstoffmaske (14, 15) und/oder als Haltemittel (16) ausgebildet sind.

4. Funktionseinheit nach einem der Ansprüche 1 bis 3,
**dadurch gekennzeichnet, daß** die Funktionseinheit (7, 8; 27; 28) eine Grundplatte (11) aufweist, die zur Aufnahme der Leuchtmittel (12A, 12B, 12C, 12D) und der Komfortelemente (10, 18), Anzeigeelemente (9, 17) und Sicherheitselemente (16, 13, 14, 15) vorgesehen ist.

5. Funktionseinheit nach einem der Ansprüche 1 bis 4,
**dadurch gekennzeichnet, daß** die Leuchtmittel als Leuchtstoffröhren (12A, 12B, 12C, 12D) ausgebildet sind, die einen im Randbereich der Grundplatte (11) angeordnetenLeuchtrahmen bilden, wobei ein Abdeckrahmen (20) und/oder Teilabdeckungen (21, 22) die Leuchtstoffröhren (12A, 12B, 12C, 12D) abschirmen und die Abdeckungen (20, 21, 22) lichtdurchlässig ausgebildet sind.

6. Funktionseinheit nach einem der Ansprüche 1 bis 5,
**dadurch gekennzeichnet, daß** eine Deckplatte (19) auf der Grundplatte (11) angeordnet ist, die die auf der Funktionseinheit (7, 8; 27; 28) angeordneten Baugruppen abdeckt sowie die Deckplatte (19) Aussparungen enthält für die dem Passagier zugänglich zu machenden Bedien-, Halte-, Sicherheits- und/oder Informationselemente.

7. Funktionseinheit nach einem der Ansprüche 1 bis 6,
**dadurch gekennzeichnet, daß** die Deckplatte (19) auf der Innenseite mit Reflexionsflächen versehen ist.

8. Funktionseinheit nach einem der Ansprüche 1 bis 7,
**dadurch gekennzeichnet, daß** an der Funktionseinheit (7, 8; 27;28) im unteren Bereich Notbeleuchtungseinheiten (26) angeordnet sind.

9. Funktionseinheit nach einem der Ansprüche 1 bis 8,
**dadurch gekennzeichnet, daß** an der Funktionseinheit (7, 8) Luftführeinrichtungen angeordnet sind, die zumindest einen Luftstrom (25A, 25B, 25C, 25D) der Klimaanlage leiten und ein Anschluß an ein Klimarohr im rückwärtigen Bereich der Funktionseinheit (7, 8) vorgesehen ist.

10. Funktionseinheit nach Anspruch 9,
**dadurch gekennzeichnet, daß** die Grundplatte bzw. Gehäuse (11) zumindest teilweise als Luftführeinrichtung ausgebildet ist.

11. Passagierraum (2, 3, 29, 30) mit mindestens einer Funktionseinheit (7, 8; 27, 28) nach einem der vorangegangenen Ansprüche, wobei die Funktionseinheit (7, 8; 27, 28) insbesondere in Passagierräumen mit einer geringen Stehhöhe vorgesehen ist.

12. Passagierraum nach Anspruch 11,
**dadurch gekennzeichnet, daß** die Funktionseinheit (7, 8; 27, 28) an Seitenwänden (23, 24) des Passagierraumes (2, 3, 29, 30) angeordnet ist, wobei Versorgungsanschlüsse für die in der Funktionseinheit (7, 8; 27; 28) zusammengefaßten Komfort-, Anzeige- und Sicherheitselemente in diesem Bereich vorgesehen sind.

13. Passagierraum nach einem der Ansprüche 11 und 12,
**dadurch gekennzeichnet, daß** zusätzlich zu den in der Funktionseinheit (7, 8; 27; 28) vorgesehenen Sicherheitselementen zwischen Deckenverkleidungsteilen des Passagierraumes (2, 3, 29, 30) Sicherheitselemente, wie Sauerstoffboxen (13) angeordnet sind.

14. Passagierraum nach einem der Ansprüche 11 und 12,
**dadurch gekennzeichnet, daß** alternativ zu den in der Funktionseinheit (7, 8; 27; 28) vorgesehenen Sicherheitselementen zwischen Deckenverkleidungsteilen des Passagierraumes (2, 3, 29, 30) Sicherheitselemente, wie Sauerstoffboxen (13) angeordnet sind.

## Claims

1. Functional unit for passenger cabins, in particular for aircraft passenger cabins, incorporating comfort elements, display elements and safety elements amongst other things, and which can be disposed in the wall region of a passenger compartment (2, 3; 29; 30),
**characterised in that** the functional unit (7; 8; 27, 28) is pillar-shaped and has light means (12A, 12B, 12C, 12D) for generally illuminating the passenger compartment.

2. Functional unit as claimed in claim 1,
**characterised in that** the light means (12A, 12B, 12C, 12D) extend at least in the vertical direction of the functional unit (7, 8; 27; 28) and border the comfort elements (10, 18), display elements (9, 17) and safety elements (16, 13, 14, 15).

3. Functional unit as claimed in one of claims 1 or 2,
**characterised in that** the safety elements comprise an oxygen box (13) with at least one oxygen mask (14, 15) and/or holding means (16).

4. Functional unit as claimed in one of claims 1 to 3,
**characterised in that** the functional unit (7, 8; 27; 28) has a base plate (11), provided as a means of accommodating the light means (12A, 12B, 12C, 12D) and the comfort elements (10, 18), display elements (9, 17) and safety elements (16, 13, 14, 15).

5. Functional unit as claimed in one of claims 1 to 4,
**characterised in that** the light means are luminescent tubes (12A, 12B, 12C, 12D) which form a light frame in the peripheral region of the base plate (11), and a cover frame (20) and/or part-covers (21, 22) screen the luminescent tubes (12A, 12B, 12C, 12D) and the covers (20, 21, 22) are transparent.

6. Functional unit as claimed in one of claims 1 to 5,
**characterised in that** a cover plate (19) is disposed on the base plate (11), which covers the components disposed on the functional unit (7, 8; 27; 28) and the cover plate (19) contains cut-outs giving the passenger access to control, holding, safety and/or information elements.

7. Functional unit as claimed in one of claims 1 to 6,
**characterised in that** the cover plate (19) is provided with reflective surfaces on the inner face.

8. Functional unit as claimed in one of claims 1 to 7,
**characterised in that** emergency lighting units (26) are provided on the functional unit (7, 8; 27; 28) in the bottom region.

9. Functional unit as claimed in one of claims 1 to 8,
**characterised in that** air delivery units are disposed on the functional unit (7, 8) which deliver at least one air flow (25A, 25B, 25C, 25D) to the air-conditioning system, and a connection to an air-conditioning pipe is provided in the rear region of the functional unit (7, 8).

10. Functional unit as claimed in claim 9,
**characterised in that** the base plate or housing (11) is at least partially designed as an air delivery unit.

11. Passenger compartment (2, 3, 29, 30) with at least one functional unit (7, 8; 27, 28) as claimed in one of the preceding claims, the functional unit (7, 8; 27, 28) having a low standing height, in particular in passenger'compartments.

12. Passenger compartment as claimed in claim 11,
**characterised in that** the functional unit (7, 8; 27, 28) is disposed on side walls (23, 24) of the passenger compartment (2, 3, 29, 30), supply connections being provided in this region for the comfort, display and safety elements incorporated in the functional unit (7, 8; 27; 28).

13. Passenger compartment as claimed in one of claims 11 and 12,
**characterised in that**, in addition to the safety elements provided in the functional unit (7, 8; 27; 28), safety elements such as oxygen boxes (13) are provided between ceiling panel parts of the passenger compartment (2, 3, 29, 30).

14. Passenger compartment as claimed in one of claims 11 and 12,
**characterised in that**, as an alternative to the safety elements provided in the functional unit (7, 8; 27; 28), safety elements such as oxygen boxes (13) are disposed between ceiling panel parts of the passenger compartment (2, 3, 29, 30).

## Revendications

1. Unité fonctionnelle pour cabines de passagers, en particulier pour cabines de passagers d'avions, qui présente notamment des éléments de confort, des éléments d'indication et des éléments de sécurité et peut être aménagée dans la zone de la paroi d'un espace passagers (2, 3; 29; 30), **caractérisée en ce que** l'unité fonctionnelle (7; 8; 27, 28) se présente sous la forme d'une colonne et présente des moyens lumineux (12A, 12B, 12C, 12D) pour l'éclairage général de l'espace passagers.

2. Unité fonctionnelle selon la revendication 1, **caractérisée en ce que** les moyens lumineux (12A, 12B, 12C, 12D) s'étendent au moins dans la direction verticale de l'unité fonctionnelle (7, 8; 27; 28) et entourent les éléments de confort (10, 18), les éléments d'indication (9, 17) et les éléments de sécurité (16, 13, 14, 15).

3. Unité fonctionnelle selon l'une quelconque des revendications 1 ou 2,
**caractérisée en ce que** les éléments de sécurité se présentent sous la forme d'une boîte à oxygène (13) avec au moins un masque à oxygène (14, 15) et/ou un moyen d'appui (16).

4. Unité fonctionnelle selon l'une quelconque des revendications 1 à 3,
**caractérisée en ce que** l'unité fonctionnelle (7, 8; 27; 28) présente une plaque de base (11) qui est prévue pour recevoir les moyens lumineux (12A, 12B, 12C, 12D) et les éléments de confort (10, 18), les éléments d'indication (9, 17) et les éléments de sécurité (16, 13, 14, 15).

5. Unité fonctionnelle selon l'une quelconque des revendications 1 à 4,
**caractérisée en ce que** les moyens lumineux se présentent sous la forme de tubes fluorescents (12A, 12B, 12C, 12D), qui forment un cadre lumineux aménagé sur la zone de bord de la plaque de base (11), où un cadre de recouvrement (20) et/ou des recouvrements partiels (21, 22) protègent les tubes fluorescents (12A, 12B, 12C, 12D) et les recouvrements (20, 21, 22) sont transparents.

6. Unité fonctionnelle selon l'une quelconque des revendications 1 à 5,
**caractérisée en ce qu'**une plaque de recouvrement (19) est aménagée sur la plaque de base (11) pour recouvrir les sous-groupes aménagés sur l'unité fonctionnelle (7, 8; 27; 28) et la plaque de recouvrement (19) contient des évidements pour les éléments de service, d'appui, de sécurité et/ou d'information auxquels le passager doit pouvoir accéder.

7. Unité fonctionnelle selon l'une quelconque des revendications 1 à 6,
**caractérisée en ce que** la plaque de recouvrement (19) est pourvue, sur la face interne, de surfaces réfléchissantes.

8. Unité fonctionnelle selon l'une quelconque des revendications 1 à 7,
**caractérisée en ce que** des unités d'éclairage d'urgence (26) sont agencées sur l'unité fonctionnelle (7, 8; 27; 28) dans la zone inférieure.

9. Unité fonctionnelle selon l'une quelconque des revendications 1 à 8,
**caractérisée en ce que** sont agencés sur l'unité fonctionnelle (7, 8) des dispositifs de ventilation, qui acheminent au moins un flux d'air (25A, 25B, 25C, 25D) à l'installation de climatisation et il est prévu un raccordement à une canalisation de climatisation dans la zone arrière de l'unité fonctionnelle (7, 8).

10. Unité fonctionnelle selon la revendication 9, **caractérisée en ce que** la plaque de base ou le boîtier (11) se présente au moins en partie sous la forme d'un dispositif de ventilation.

11. Espace passagers (2, 3, 29, 30) comprenant au moins une unité fonctionnelle (7, 8; 27, 28) selon l'une quelconque des revendications précédentes, dans lequel l'unité fonctionnelle (7, 8; 27, 28) présente, en particulier dans les espaces passagers, une faible hauteur debout.

12. Espace passagers selon la revendication 11,
**caractérisé en ce que** l'unité fonctionnelle (7,8; 27, 28) est aménagée sur les parois latérales (23, 24) de l'espace passagers (2, 3, 29, 30), les raccordements d'alimentation pour les éléments de confort, d'indication et de sécurité regroupés étant prévus dans cette zone.

13. Espace passagers selon l'une quelconque des revendications 11 et 12,
**caractérisé en ce que**, en plus des éléments de sécurité prévus dans l'unité fonctionnelle (7, 8; 27; 28), on aménage, entre des parties de carénage du plafond de l'espace passagers (2, 3, 29, 30), des éléments de sécurité, tels que des boîtes à oxygène (13).

14. Espace passagers selon l'une quelconque des revendications 11 et 12,
**caractérisé en ce que**, en remplacement des éléments de sécurité prévus dans l'unité fonctionnelle (7, 8; 27; 28), on aménage, entre des parties de carénage du plafond de l'espace passagers (2, 3, 29, 30), des éléments de sécurité, tels que des boîtes à oxygène (13).
